# EUROPEAN PATENT APPLICATION

(11) **EP 4 095 095 A1**
(43) Date of publication of application: **30.11.2022**
(21) Application number: 20915656.1
(22) Date of filing: 07.12.2020
(51) Int. Cl.: C01B 32/164, C01B 32/162

(54) **METHOD AND DEVICE FOR PREPARING CARBON NANOTUBES AND HYDROGEN**

(30) Priority: 20.01.2020 CN 202010066798
(71) Applicant: Shandong Dazhan Nano Materials Co., Ltd., Binzhou, Shandong 256220 (CN); Ganhai Semiconductor Materials (Shanghai) Co., Ltd, Shanghai, 201210 (CN)
(72) Inventor: LI, Yan, Binzhou, Shandong 256220 (CN); GENG, Lei, Binzhou, Shandong 256220 (CN); LV, Zhenhua, Binzhou, Shandong 256220 (CN); LI, Longli, Binzhou, Shandong 256220 (CN)
(74) Representative: V.O.
(86) International application number: PCT/CN2020/134160
(87) International publication number: WO 2021/147531

(57) **Abstract**

A method capable of continuously producing carbon nanotubes and hydrogen. The method comprises: preparing a catalyst precursor, and pre-reducing the catalyst precursor; adding a certain height of carbon nanotubes in a reactor as a stacked bed in advance, and electrically heating the carbon nanotubes to the reaction temperature of a vapor deposition furnace in the presence of a protective gas; putting the pre-reduced catalyst or unreduced catalyst precursor into the reactor; under the condition of stirring the solid materials in the reactor, introducing a carbon source gas into the reactor, reacting same by means of the vapor deposition furnace to generate new carbon nanotubes and hydrogen, continuously discharging a part of carbon nanotubes and a part of hydrogen, and repeating the described steps to achieve the continuous preparation of carbon nanotubes. A device for the method. The device has the advantages of a simple structure, low costs, easy operation, and a high utilization rate of raw materials, can manufacture a large batch of carbon nanotubes with a high purity at one time, and is suitable for large-scale industrial production.

## Description

### Technical Field

The present disclosure relates to an apparatus and a method for preparing carbon nanotubes and hydrogen, in particular to a process method and an apparatus for preparing carbon nanotubes and hydrogen by stacking a catalyst in a reactor equipped with a discharge device to carry out vapor deposition reaction.

### Background Art

A carbon nanotube possesses excellent physical and mechanical properties. The microstructure of a carbon nanotube may be viewed as a seamless hollow tube formed by rolling a graphite sheet. It has a very large aspect ratio, generally with a diameter in the range of 1-100 nm, and a length of several microns to over one hundred microns. A carbon nanotube shows superior mechanical and electric properties. Its hardness is comparable with that of diamond, and its Young's modulus is about 1.8TPa. Its tensile strength is about 200GPa, 100 times higher than the strength of steel, but its weight is only 1/6 to 1/7 of the weight of the latter. Meanwhile, the maximum elastic strain of a carbon nanotube is up to about 12%, and thus it is as flexible as a spring. The electric conductivity of a carbon nanotube is up to ten thousand times that of copper, and its heat conductivity is very good as well. Owing to their superb properties, carbon nanotubes are expected to be used widely in a variety of fields such as nanoelectronic devices, catalyst supports, electrochemical materials, composite materials and the like.

In recent years, due to the increasing awareness of environmental protection and the guidance of national policies, hydrogen fuel cell vehicles and lithium battery electric vehicles represent the development trend in the future. Along with the progress of science and technology, the problems that once plagued the development of hydrogen fuel cells, such as safety and hydrogen fuel storage, have been gradually solved, and the related technologies have been improved continuously. However, the cost problem is still the biggest bottleneck that hinders the development of hydrogen fuel cell vehicles. A large quantity of high-purity hydrogen resources are the basic resources that guarantee realization of low-cost hydrogen fuel cell vehicles.

Realization of production, particularly mass production of carbon nanotubes is a prerequisite for application of the carbon nanotube technology, and it's also a bottleneck constraining industrialization of this technology. In the industrial batch preparation of carbon nanotubes at present, single-walled carbon nanotubes are prepared by an arc process, and multi-walled carbon nanotubes are prepared by a CVD process, wherein fluidized bed, fixed bed and moving bed are mostly used for the CVD process. Low carbon alkanes, alkenes, alcohols and the like are the main carbon sources for preparation of carbon nanotubes, but large molecular weight carbon sources such as cyclohexane, benzene, phenanthrene and the like can also be used. Due to the low cost and easy availability of low-carbon hydrocarbons, it's desirable to use low-carbon hydrocarbons, such as methane, propane, ethylene, etc., as carbon sources for preparation of carbon nanotubes. Because of the special properties of low-carbon hydrocarbons, when methane is used as a carbon source for industrial production of carbon nanotubes by the CVD reaction, the traditional fixed bed can solve the problem of rapid carbon deposition and deactivation of the catalyst to a certain extent. However, when the fixed bed is used, a small amount of catalyst is generally laid in a porcelain boat, so an obvious shortcoming is the poor heat and mass transfer during the reaction. In addition, the production capacity is low. That is, the production capacity is limited greatly. On the other hand, in a fluidized bed, it is difficult to solve the problem of mismatch between the cracking speed of the carbon source and the assembly speed of the carbon tube. When low-carbon hydrocarbons are used as carbon sources for preparation of carbon nanotubes, the current traditional processes have the problems of low yield, low production capacity and low carbon source utilization. The existing technologies can hardly solve the technical problem of small production capacity per unit volume, and it is difficult to achieve large-scale industrial production.

Therefore, there is still a need in the art to develop a method and an apparatus for preparation of carbon nanotubes and hydrogen by the CVD reaction using low-carbon hydrocarbons as carbon sources, which apparatus shall have the advantages of simple structure, low cost, and good ability to increase utilization of the catalyst and raw material. Such method and apparatus can be used to prepare carbon nanotubes with high yield, high output, high production capacity, high carbon source utilization, and stable product quality, suitable for large-scale industrial production.

### Summary

The present disclosure is aimed to provide an apparatus and a method for continuous production of carbon nanotubes and hydrogen, wherein the apparatus has the advantages of simple structure, low cost, easy operation, and high utilization of the raw material. It is capable of producing a large quantity of high-purity carbon nanotubes, suitable for large-scale industrial production.

Therefore, in one aspect of the present disclosure, there is provided a method for continuous preparation of carbon nanotubes and hydrogen, comprising:
(a) preparing a catalyst precursor, or pretreating a catalyst precursor onto a support;
(b) pre-reducing the catalyst precursor or the catalyst precursor supported on carbon nanotubes;
(c) preloading carbon nanotubes into a reactor to a height to form a packed bed, and electrically heating the carbon nanotubes to a CVD reaction temperature in the presence of a protective gas;
(d) feeding the catalyst or the catalyst supported on the carbon nanotubes obtained in step (b) into the reactor;
(e) introducing a carbon source gas into the reactor while stirring the solid material in the reactor to form new carbon nanotubes and hydrogen by the CVD reaction;
(f) keeping the carbon nanotube bed at a height and continuously discharging a portion of the carbon nanotubes and a portion of the hydrogen; and
(g) repeating steps (d) - (f) to realize continuous preparation of the carbon nanotubes.

In a preferred embodiment according to the present disclosure, the support is carbon nanotubes or carbon black.

In a preferred embodiment according to the present disclosure, said pretreating a catalyst precursor onto a support is performed by a process selected from the group consisting of precipitation, impregnation, sol-gel, melting or thermal decomposition.

In a preferred embodiment according to the present disclosure, the step of pretreating a catalyst precursor onto a carbon nanotube support comprises impregnating the carbon nanotube support with a solution of an active metal salt, followed by precipitation, drying and calcination.

In a preferred embodiment according to the present disclosure, in step (c), the height of the preloaded carbon nanotube packed bed is 1/5-4/5, preferably 1/2-4/5 of a height of the reactor as measured from a bottom of the reactor.

In a preferred embodiment according to the present disclosure, the carbon nanotubes are electrically heated directly, and optionally, the heating is assisted by resistance wire heating, graphite electrode heating, silicon-molybdenum rod heating or a combination thereof.

In a preferred embodiment according to the present disclosure, in step (e), a decarbonization gas is introduced at a ratio continuously or intermittently, wherein the decarbonization gas is carbon dioxide, oxygen, water vapor or a combination thereof, preferably carbon dioxide.

In a preferred embodiment according to the present disclosure, a volume ratio of the decarbonization gas to the carbon source gas is 0.02-0.3:1, preferably 0.04-0.15:1.

In a preferred embodiment according to the present disclosure, in step (e), a mixed gas of the carbon source gas and a carrier gas is introduced into the reactor, wherein the carrier gas is selected from the group consisting of nitrogen, argon and hydrogen, wherein a volume ratio of the carrier gas to the carbon source gas is 0.2-10:1, preferably 1-5:1.

In a preferred embodiment according to the present disclosure, the carbon source gas is a hydrocarbon having 6 or less carbon atoms, with methane, propane and ethylene being preferred, and methane and propane being more preferred.

In another aspect of the present disclosure, there is provided an apparatus for continuous preparation of carbon nanotubes and hydrogen, comprising:
(a) a main reactor for a CVD reaction, wherein the main reactor has a catalyst feed inlet, a gas inlet, a reaction material outlet and a gas outlet; wherein a stirring system and a heating and temperature control system are provided in a reaction zone of the main reactor;
(b) a catalyst storage tank, wherein the catalyst storage tank is provided above the main reactor and in communication with the main reactor through the catalyst feed inlet; and
(c) a discharge device, wherein the discharge device is provided at a bottom of the main reactor to discharge a carbon nanotube product from the reactor through the reaction material outlet,
wherein the gas inlet is located at the bottom of the main reactor, and the gas outlet is located at a top of the main reactor for discharging a reaction tail gas and hydrogen.

In a preferred embodiment according to the present disclosure, the gas inlet is located below the discharge device.

In a preferred embodiment according to the present disclosure, the gas inlet is integrated with the discharge device.

In a preferred embodiment according to the present disclosure, the discharge device is a tower grate, a flap grate or a star discharger.

In a preferred embodiment according to the present disclosure, the apparatus further comprises a catalyst feeding-distributing device provided at the catalyst feed inlet of the main reactor.

In a preferred embodiment of the present disclosure, the apparatus further comprises a pressure lock device provided at the catalyst feed inlet and a pressure lock device provided at the product outlet.

In a preferred embodiment of the present disclosure, the apparatus further comprises a filter provided in front of the gas outlet.

In a preferred embodiment of the present disclosure, the apparatus further comprises a material height display system provided in the reaction zone of the main reactor.

In a preferred embodiment of the present disclosure, the gas in the reactor has a flow rate of 0.02-10 m/s, preferably 0.05-3 m/s, more preferably 0.05-1 m/s.

In a preferred embodiment of the present disclosure, a reaction temperature is set at 500 °C-1100 °C, preferably 650 °C-900 °C, more preferably 700 °C-850 °C; a preheating temperature of the protective gas is 550 °C-1100 °C, preferably 650 °C-900 °C; and a preheating temperature of the carbon source gas is 500 °C-800 °C, preferably 650 °C-800 °C. The catalyst precursor is pre-reduced at a temperature of 450 °C-650 °C, and a volume ratio of the carrier gas to the carbon source gas is 0.2-10:1, preferably 1-5:1.

### Description of the Drawings

The present disclosure will be illustrated with reference to the following drawings.

Among the drawings:
Fig. 1 is a schematic view of a reaction apparatus comprising a five-layer tower grate as a discharge device according to an embodiment of the present disclosure;
Fig. 2 is a schematic view of a reaction apparatus comprising a three-layer tower grate as a discharge device according to another embodiment of the present disclosure;
Fig. 3 is a schematic view of a reaction apparatus comprising a flap grate as a discharge device according to another embodiment of the present disclosure;
Fig. 4 is a schematic view of a five-layer tower grate used in a preferred embodiment of the present disclosure;
Fig. 5 is a schematic view of a flap grate used in a preferred embodiment of the present disclosure; and
Figs. 6-9 are SEM photos of the carbon nanotubes prepared in Examples 1 to 4 respectively according to the present disclosure.

### Detailed Description

The method and apparatus according to the present disclosure may be used to prepare carbon nanotubes and hydrogen continuously, and the growth yield of the resulting carbon nanotubes is 120 or higher, and the purity is ≥ 99%.

The method for continuous preparation of carbon nanotubes and hydrogen and the reaction apparatus used are described below.

### (a) Preparing a catalyst precursor, or pretreating a catalyst precursor onto a support

The catalyst precursor used for preparing carbon nanotubes may be prepared using those methods known in the art, such as precipitation, impregnation, sol gel, melting, thermal decomposition, etc. Preferably, the support is impregnated with a solution of an active metal salt, followed by precipitation, drying, and calcination.

The catalyst precursor may be pretreated onto the support by impregnation, sol-gel, etc. In the impregnation process, the support may be impregnated with a solution of an active metal salt, precipitated with a precipitant, dried and calcined to obtain a mixture of carbon nanotubes and the catalyst precursor. Aqueous ammonia, aqueous sodium hydroxide solution, ammonium carbonate solution, or the like may be used as the precipitant. The gel process comprises mixing a solution of an active metal salt with citric acid, combining the mixture into the support, heating to allow for reaction, evaporating water to particular solution density and viscosity, stopping the reaction, and then drying and calcining. The support may be carbon nanotubes, carbon black, etc., preferably carbon nanotubes.

### (b) Pre-reducing the catalyst precursor or the catalyst precursor supported on carbon nanotubes

The step of pre-reducing the catalyst precursor or the catalyst precursor supported on carbon nanotubes may be performed outside the reactor in advance, or inside the reactor with the use of the hydrogen in the reactor.

According to the present disclosure, since the mixture of the carbon nanotubes and the catalyst precursor is reduced in advance, the designed size of the active sites of the catalyst is maintained effectively, and the agglomeration and ripening effect of metal particles is weakened to the greatest extent, so that the carbon nanotubes produced have a narrow distribution of small diameters and a higher specific surface area.

### (c) Preloading carbon nanotubes into a reactor to a height to form a packed bed, and electrically heating the carbon nanotubes to a CVD reaction temperature in the presence of a protective gas

In the method according to the present disclosure, pure carbon nanotubes are preloaded into the reactor and stacked to a certain height, wherein the pure carbon nanotubes serve as a supporting body of the catalyst. Because carbon nanotubes are a special loose material with gas passages inside, they can be used as a packed bed for supporting the catalyst. Due to the small particle size and high density of the catalyst, after the catalyst or the catalyst supported on the carbon nanotubes is added into the reactor, the catalyst will enter the voids in the carbon nanotube packed bed under the action of stirring and gravity, thereby realizing secondary dispersion of the catalyst with the help of the carbon nanotubes.

Compared with a fixed bed reactor, since the reactor according to the present disclosure is pre-filled with a loose and porous carbon nanotube bed which has an appropriate height, better heat transfer and contact with a carbon source can be achieved after the catalyst is added, thereby increasing the efficiency of heat and mass transfer. In a fluidized bed, the catalyst is deactivated rapidly due to the large gas velocity for fluidization. In contrast, in the case of the packed bed, a smaller gas velocity can be utilized to allow for continuous growth of carbon nanotubes without catalyst deactivation. For carbon sources of low-carbon hydrocarbons such as methane, propane and the like, the packed bed is the best choice for the reaction to achieve stable quality and maximize production capacity.

In step (c) of the method, the height of the preloaded carbon nanotube packed bed is 1/5-4/5, preferably 1/2-4/5 of the height of the reactor as measured from the bottom of the reactor. If the bed is too low, the amount of carbon tubes is too small to fully support and disperse the catalyst. If the bed is too high, the growing space of the catalyst is limited, and the catalyst cannot contact the carbon source effectively in time. In addition, the carbon nanotube bed is a conducting medium for electric heating. If its amount is too small, heat cannot be provided sufficiently.

Preferably, a material height monitoring device is provided in the reactor for real-time monitoring of the position of the material, so that the height of the material in the reactor can be observed in real time, thereby facilitating meticulous automatic operation. By monitoring the height of the material, the steadiness of the reaction can be fed back. At the same time, the parameters can be adjusted in time to regulate the addition of the catalyst and the discharge of the material.

In the present disclosure, the term "protective gas" means a gas that will not interfere with the reaction of the carbon source and the catalyst, nonlimiting examples of which include, for example, nitrogen, helium, argon, etc., or a mixture thereof.

Because carbon nanotubes are good conductors, they can be supplied with electricity directly and thus heated in the presence of a protective gas so that the reactor reaches the CVD reaction temperature. The heating process can also be carried out by external heating, or by supplying electricity to the carbon nanotubes to generate heat and by externally heating the carbon nanotubes at the same time.

The heating for reaction may be in the form of direct heating of the carbon tubes, preferably using electrodes to electrically heat the carbon tubes directly. Optionally, resistance wire heating, graphite electrode heating, silicon-molybdenum rod heating, external fuel gas fire heating and the like may be further used for auxiliary heating. By supplying electricity to the carbon nanotube packed bed directly for heating to provide the reaction temperature, the supporting facilities of the reaction apparatus are simplified greatly; the space is saved; the energy consumption is reduced; and the temperature control is more accurate.

### (d) Feeding the catalyst or the catalyst supported on the carbon nanotubes obtained in step (b) into the reactor

The pre-reduced catalyst or carbon-nanotube-supported catalyst is stored in a catalyst storage tank. The catalyst storage tank is disposed above the main reactor and in communication with the main reactor through a catalyst feed inlet. The catalyst in the storage tank enters the main reactor through the catalyst feed inlet.

Preferably, the pre-reduced catalyst or carbon-nanotube-supported catalyst is added to the reactor through a catalyst feeding-distributing device. The catalyst feeding-distributing device is a device for secondary dispersion of the catalyst material fed into the reactor. The device is an annular disc which looks like a clock, with a scraper at the upper part and a grooved container at the bottom, wherein the grooved container has a plurality of annular holes. After the catalyst falls on a certain position of the disc continuously, the scraper rotates rapidly to scrape the catalyst evenly onto the carbon nanotube bed below through the circular holes, so that the catalyst is evenly dispersed into the carbon nanotube bed below without stacking together.

### (e) Introducing a carbon source gas into the reactor while stirring the solid material in the reactor to form new carbon nanotubes and hydrogen by the CVD reaction

The reaction zone in the main reactor according to the present disclosure is provided with a stirring system. The stirring system may be an integral stirring system extending from the top to the bottom of the reactor, or two sets of independent stirring systems may be provided at the top and the bottom of the reactor respectively. The two stirring systems may be set to operate in an intermittent or continuous mode, which is more flexible. The stirring device can make the materials mix well and eliminate possible gas channeling and agglomeration of the reaction material.

The stirring system is in the form of frame wall scraping mixing or multi-blade mixing, preferably in the form of frame wall scraping mixing. There is no special limitation to the stirring system applicable to the present disclosure, so long as the material can be physically stirred to realize uniform mixing of the material.

The carbon source gas enters the main reactor through the gas inlet at the bottom of the main reactor. The carbon source gas used in the method according to the present disclosure is a hydrocarbon having 6 or less carbon atoms, with methane, propane and ethylene being preferred, and methane and propane being more preferred. In this step, a mixed gas of a carbon source gas and a carrier gas may be introduced. The carrier gas includes but is not limited to nitrogen, argon and hydrogen, and the volume ratio of the carrier gas to the carbon source gas is 0.2-10:1, preferably 1-5:1. When the carrier gas is nitrogen or argon, it plays a role in inert protection and dilution of the concentration of the carbon source gas. When the carrier gas is hydrogen, hydrogen can regulate the concentration of the carbon source gas and the amorphous carbon produced in the etching reaction. Hydrogen plays a role in dilution.

There is no special limitation to the way for introducing the gas. The carbon source gas and the carrier gas may be introduced in the form of a mixed gas, or a certain volume of the carbon source gas and a certain volume of the carrier gas may be introduced successively. In step (e), the volume ratio of the carrier gas to the carbon source gas is 0.2-10:1, preferably 1-5:1.

According to the present disclosure, preferably, in step (e), a decarbonization gas is introduced at a ratio continuously or intermittently, wherein the decarbonization gas is carbon dioxide, oxygen, water vapor or a combination thereof, preferably carbon dioxide. The volume ratio of the decarbonization gas to the carbon source gas is 0.02-0.3:1, preferably 0.04-0.15:1. When a low-carbon hydrocarbon such as methane is used as a carbon source to produce carbon nanotubes, catalyst deactivation due to formation of a carbon coating around the catalyst is easily resulted in industrial applications, and it is impossible to grow carbon nanotubes on the catalyst at a high yield. According to the present disclosure, a carbon nanotube particle packed bed having multiple gas passages is used in combination with mixing of a particular proportion of a decarbonization gas into the reaction gas. As a result, the problem of catalyst deactivation due to the carbon coating in the case of methane being used as the carbon source is solved satisfactorily, and preparation of carbon nanotubes and hydrogen with high carbon source utilization is realized.

### (f) Keeping the carbon nanotube bed at a level and continuously discharging a portion of the carbon nanotubes and a portion of the hydrogen

The discharge device is provided at the bottom of the main reactor, and the carbon nanotube bed is kept at a certain level, for example, 1/5-4/5, preferably 1/2-4/5 of the height of the reactor, as measured from the bottom of the reactor. A portion of the carbon nanotube product is discharged from the reactor through the discharge device. The reaction tail gas and hydrogen are discharged from the reactor through the gas outlet at the top of the main reactor.

### (g) Repeating steps (d) - (f) to realize continuous preparation of the carbon nanotubes

Steps (d) - (f) are repeated to keep continuous feeding of the catalyst from above the reactor and continuous discharge of the material from below, so as to realize continuous preparation of the carbon nanotubes.

In a preferred embodiment according to the present disclosure, the method for continuous preparation of carbon nanotubes using the reaction apparatus of the present disclosure comprises the following specific steps:
(1) preparing a catalyst precursor, or pretreating a catalyst precursor onto a support;
(2) pre-reducing the catalyst precursor or reducing it with hydrogen in a reaction furnace;
(3) loading carbon nanotubes into the reactor to a particular height, introducing a preheated protective gas at a flow rate, and conducting electrical heating on the carbon nanotubes to a process temperature, wherein the heating process is carried out by using external heating, heating of the carbon nanotubes by supplying electricity to them, or both;
(4) loading the catalyst or carbon-nanotube-supported catalyst into the reactor through a pressure lock for quantitative feed of the catalyst and a distributing device;
(5) performing continuous stirring or intermittent stirring during the reaction process, introducing a mixture of a preheated carbon source and a protective gas at a ratio through a gas distributor, and introducing a decarbonization gas at a particular ratio continuously or intermittently;
(6) allowing the mixed materials to undergo CVD reaction to grow carbon nanotubes, and discharging a tail gas from the top of the reactor through a separator;
(7) opening a discharge device, wherein a flap grate is opened intermittently, and a tower grate discharges the material continuously with a scraper, wherein the material is discharged from a discharge outlet into a cooling tank for cooling in an inert atmosphere, wherein the material is transferred to a product storage tank after cooling;
(8) repeating steps (4) - (7) in such a way to keep continuous feed of the catalyst from above and continuous discharge of the material from below to realize continuous production and preparation.

In a preferred embodiment according to the present disclosure, the gas in the reactor has a flow rate of 0.05-1 m/s.

In a preferred embodiment according to the present disclosure, the reaction temperature is set at 700 °C-850 °C; the preheating temperature of the protective gas is 650 °C-900 °C; and the preheating temperature of the carbon source gas is 650 °C-800 °C. The catalyst precursor is pre-reduced at a temperature of 450 °C-650 °C, and a volume ratio of the carrier gas to the carbon source gas is 0.2-10:1, preferably 1-5:1.

Specific parts of the apparatus for continuous preparation of carbon nanotubes and hydrogen are described as follows.

### (1) Main reactor

In the present disclosure, a main reactor refers to a reactor for preparation of carbon nanotubes using a catalyst to split a carbon source catalytically by a CVD reaction. In this reactor, the carbon source grows into carbon nanotubes on a catalyst support by the action of a catalyst at an appropriate temperature, for example, 500-1100 °C, preferably 650-900°C, more preferably 700-800°C.

According to the present disclosure, the reactor may be a packed bed reactor with a stirring system at the top or bottom thereof and pressure locks at the feed and discharge positions to realize high-pressure operation. The reactor has a ratio of length to diameter in the range of 2-25:1, preferably 3-10:1, more preferably 3-6:1.

The "stacked bed" reactor is a reactor comprising a reaction zone in which a carbon nanotube bed is preloaded to a certain height, and a catalyst is dispersed evenly in the voids of the carbon nanotube stacked bed, wherein a carbon source gas undergoes the CVD reaction under the action of the catalyst to form new carbon nanotubes. There is no special limitation to the reactor useful for the present disclosure on condition that a reaction zone accommodating a carbon nanotube stacked bed for the CVD reaction can be provided.

According to the present disclosure, the reactor may be a stainless steel reactor with its inner container lined with a refractory insulating layer, a metal reactor, a quartz tube reactor, a barrel or kiln shaped reactor formed by enclosing a refractory material, or a combination thereof, preferably a stainless steel reactor with its inner container lined with a refractory insulating layer.

The main reactor according to the present disclosure comprises a catalyst feed inlet, a gas inlet, a reaction material outlet and a gas outlet.

The carbon source gas, protective gas and carrier gas enter the main reactor through the gas inlet at the bottom of the main reactor. The gas inlet may be disposed under the discharge device, or above the discharge device, or integrated with the discharge device to form an integral part with the discharge device. Preferably, the gas inlet is integrated with the discharge device.

According to the present disclosure, the gas outlet is disposed at the upper part of the main reactor. The main reactor further comprises a filter disposed in front of the gas outlet. The filter is formed by pressing high mesh, high temperature stainless steel powder, and has micron-sized pores to achieve gas-solid separation. After the reaction tail gas and a portion of hydrogen are discharged from the reactor through the gas outlet, they enter a PSA system for hydrogen purification, wherein the purity may be up to 99.99%.

The reaction zone of the main reactor is provided with a stirring system and a heating and temperature control system. The stirring system is in the form of frame wall scraping mixing or multi-blade mixing, preferably in the form of frame wall scraping mixing. There is no special limitation to the stirring system applicable to the present disclosure, so long as the material can be physically stirred to realize uniform mixing of the material.

The heating and temperature control system is disposed on the carbon nanotube bed pre-stacked in the reactor, and it may be in the simple form of electrode. Electrodes may be used to supply electricity to the carbon nanotube bed for direct heating. Optionally, the heating is assisted by resistance wire heating, graphite electrode heating, silicon-molybdenum rod heating, external fuel gas fire heating, or the like. Cathodes and anodes may be arranged at a plurality of spots and/or in a plurality of layers to achieve a uniform temperature distribution. The voltage for supplying electricity is 12-1000 V, preferably 110-380 V.

The reaction apparatus according to the present disclosure further comprises a pressure lock device provided at the catalyst feed inlet, and a pressure lock device provided at the product outlet to ensure high pressure operation. The feed gas lock valve at the feed position and the discharge gas lock valve at the discharge position ensure that reaction can occur continuously under high pressure in the reactor, so as to effectively increase the reaction temperature and the production capacity. The pressure in the reactor is in the range of 0-5 MPa, preferably 0-2.0 MPa.

### (2) Catalyst storage tank

The catalyst storage tank is disposed above the main reactor and in communication with the main reactor through the catalyst feed inlet, and the catalyst storage tank is used for storing the pretreated catalyst or the catalyst supported on the carbon nanotubes. The catalyst is added into the main reactor from the catalyst storage tank through the catalyst feed inlet.

Preferably, a catalyst feeding-distributing device is provided at the catalyst feed inlet of the main reactor. The catalyst feeding-distributing device is a device for secondary dispersion of the catalyst material fed into the reactor. The device is an annular disc which looks like a clock, with a scraper at the upper part and a grooved container at the bottom, wherein the grooved container has a plurality of annular holes. After the catalyst falls on a certain position of the disc continuously, the scraper rotates rapidly to scrape the catalyst evenly onto the carbon nanotube bed below through the circular holes, so that the catalyst is evenly dispersed into the carbon nanotube bed below without stacking together.

### (3) Discharge device

The discharge device is provided at the bottom of the main reactor to discharge a carbon nanotube product from the reactor through the reaction material outlet.

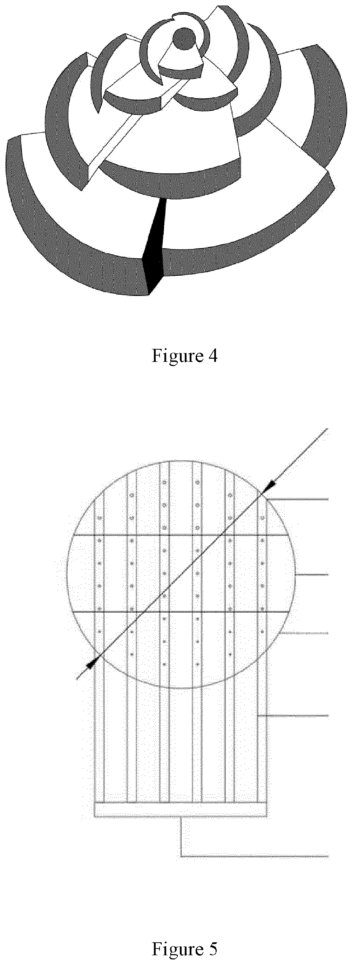

The discharge device used in the reaction apparatus according to the present disclosure is a tower grate, a flap grate or a star discharger. As shown in Figure 4, the tower grate has a multi-layer grate structure in the shape of a pagoda with a small top and a big bottom. There is a certain gap between an upper layer and a lower layer. Each layer is provided with a plurality of discharge scrapers for scraping the solid material down. At the same time, a gas can be delivered upward through the interlayer gap in the tower grate. The multi-layer tower grate has 2-10 layers, preferably 3-5 layers, with a plurality of discharge scrapers and wear plates.

As shown in Figure 5, the flap grate is a circular valve grate, wherein the flap having holes is fixed on the reactor along a rotating shaft. When started, the stationary shaft does not move, and the remaining portion turns over to discharge the carbon nanotube product accumulated on the grate from the reaction apparatus.

A rotating impeller in the star discharger acts to convey a material, discharge the material from the bin under the gravity of the material, and feed it into a next device continuously and evenly.

The tower grate, flap grate and star discharger all have gaps or holes in their structures. Hence, they have a gas distribution function in addition to the discharge function. Therefore, according to the present disclosure, the gas inlet of the reactor may be disposed below the discharge device, or above the discharge device, or integrated with the discharge device. Preferably, it is integrated with the discharge device. When a mixed gas flows upward from the gas inlet and enters the reaction zone through the tower grate, the gas that has entered the reaction zone is discharged from the interlayer gaps in the tower grate. A top view shows a gas distribution effect in a circular plane where the gas radiates from the center of the circle to many places around. Distribution of the gas in this manner is uniform, and the outflow speed of the gas is consistent, which is conducive to the reaction. A similar gas distribution effect can also be achieved when a mixed gas enters the reaction zone through the flap holes of the flap grate or the rotating impeller of the star discharger.

Preferably, the flap grate or the multi-layer tower grate is followed by a pressure lock for discharge of the material according to the present disclosure. The pressure lock is a device enabling continuous operation under high pressure conditions. It comprises three parts A, B and C, among which A and C are valves, and B is a large cavity for holding the material. While the reactor is held under high pressure, valve A is opened first to allow the material in the reactor to enter cavity B. After the pressure is consistent, valve A is closed, and valve C is opened to discharge the material, thereby completing one discharge. The frequency of pneumatically opening A and C may be adjusted to achieve continuous discharge. The pressure lock with which the apparatus is equipped enables high-pressure operation of the reaction, and helps to reduce the influence of scale-up of the reactor diameter on heat transfer, accelerate the reaction rate and increase the output of carbon nanotubes per unit volume.

The reaction apparatus according to the present disclosure innovatively integrates intake of the mixed gas with the flap valve or the tower grate, which greatly saves the space for the components in the reactor, and is more conducive to the distribution of the reaction gas and the progress of the reaction.

Now specific embodiments of the present disclosure will be described in detail with reference to the accompanying drawings.

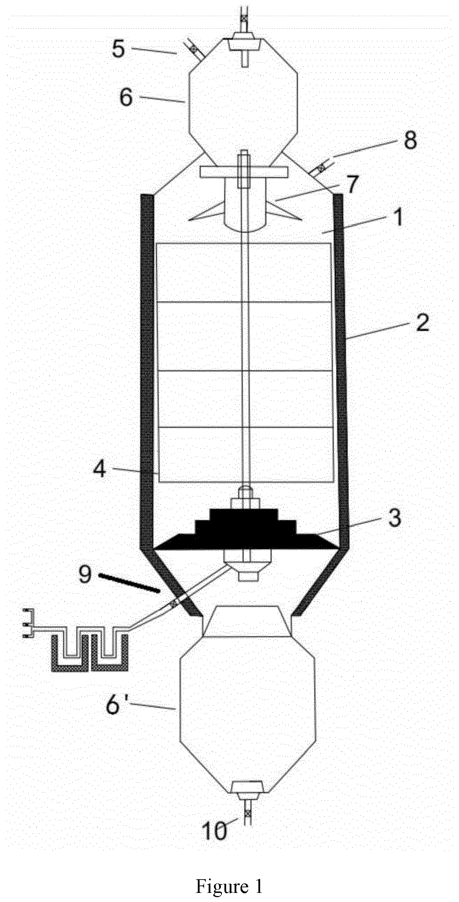

Figure 1 is a schematic view showing a reaction apparatus comprising a five-layer tower grate as a discharge device according to a preferred embodiment according to the present disclosure.

The reaction apparatus shown in Figure 1 comprises a main reactor 1; a stirring system 4 and an electrode heating and temperature control system 2 provided in the reaction zone of the main reactor 1; a five-layer tower grate 3 provided at the bottom of the main reactor 1; a gas inlet 9 provided under the five-layer tower grate; pressure locks 6 and 6' provided at the catalyst feed inlet at the top of the main reactor 1 and at the outlet of the reaction material; a catalyst distributing device 7 provided under the catalyst feed inlet at the top of the reactor; and a gas outlet 8 located at a side of the upper part of the main reactor 1.

When the reaction apparatus shown in Figure 1 is operated, a catalyst enters the main reactor 1 through the catalyst feed inlet 5 and the pressure lock 6, goes through the catalyst distributing device 7 for secondary dispersion, and then enters a carbon nanotube packed bed pre-stacked in the reactor to 3/4 of the height of the main reactor. A carrier gas and a carbon source gas, both of which are preheated, flow through the gas inlet 9 under the five-layer tower grate 3 at the bottom of the main reactor, through the tower grate 3 for distribution, and enter the main reactor 1. The carbon source gas undergoes a CVD reaction under the action of the catalyst to generate carbon nanotubes and hydrogen. More and more carbon nanotubes are generated gradually. The carbon nanotubes are discharged from the reactor by the discharge scrapers of the five-layer tower grate 3, and enter the pressure lock device 6'. The pressure lock sustains discharge from the reactor under high pressure. The carbon nanotubes are discharged from the reaction apparatus through the product discharge outlet 10. A reaction tail gas and hydrogen are discharged from the gas outlet 8 at the upper part of the main reactor. Continuous feed from the top of the reactor and continuous discharge from the bottom of the reactor are maintained to realize continuous production of carbon nanotubes.

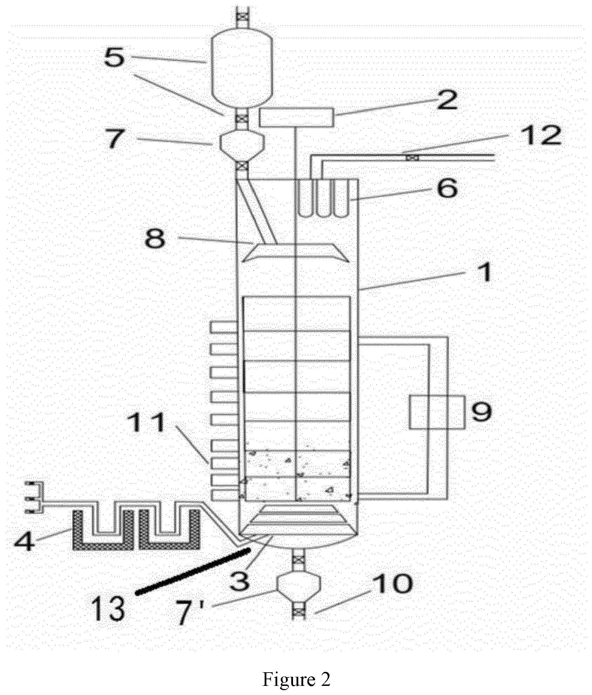

Figure 2 is a schematic view showing a reaction apparatus comprising a three-layer tower grate as a discharge device according to a preferred embodiment according to the present disclosure.

The reaction apparatus shown in Figure 2 comprises a main reactor 1; a stirring system 2, an electrode heating and temperature control system 3 and a material height display system 11 provided in the reaction zone of the main reactor 1; a three-layer tower grate 3 provided at the bottom of the main reactor 1; a gas inlet 13 provided under the three-layer tower grate; pressure locks 7 and 7' provided at the catalyst feed inlet at the top of the main reactor 1 and at the outlet of the reaction material; a catalyst distributing device 8 provided under the catalyst feed inlet at the top of the reactor; a gas outlet 12 located at a side of the upper part of the main reactor 1; and a filter 6 provided in front of the gas outlet.

When the reaction apparatus shown in Figure 2 is operated, a catalyst enters the main reactor 1 through the catalyst feed inlet and the pressure lock 7 from a catalyst storage tank 5, goes through the catalyst distributing device 8 for secondary dispersion, and then enters a carbon nanotube packed bed pre-stacked in the reactor to 3/5 of the height of the main reactor. A carrier gas and a carbon source gas, both of which are preheated in a preheating furnace 4, flow through the gas inlet 13 under the three-layer tower grate 3 at the bottom of the main reactor, through the tower grate 3 for distribution, and enter the main reactor 1. The carbon source gas undergoes a CVD reaction under the action of the catalyst to generate carbon nanotubes and hydrogen. The material height display system 11 monitors the height of the material in the reactor in real time. More and more carbon nanotubes are generated gradually. The carbon nanotubes are discharged from the reactor by the discharge scrapers of the three-layer tower grate 3, and enter the pressure lock device 7'. The pressure lock sustains discharge from the reactor under high pressure. The carbon nanotubes are discharged from the reaction apparatus through the product discharge outlet 10. A reaction tail gas and hydrogen are discharged from the gas outlet 12 at the upper part of the main reactor through the filter 6. Continuous feed from the top of the reactor and continuous discharge from the bottom of the reactor are maintained to realize continuous production of carbon nanotubes.

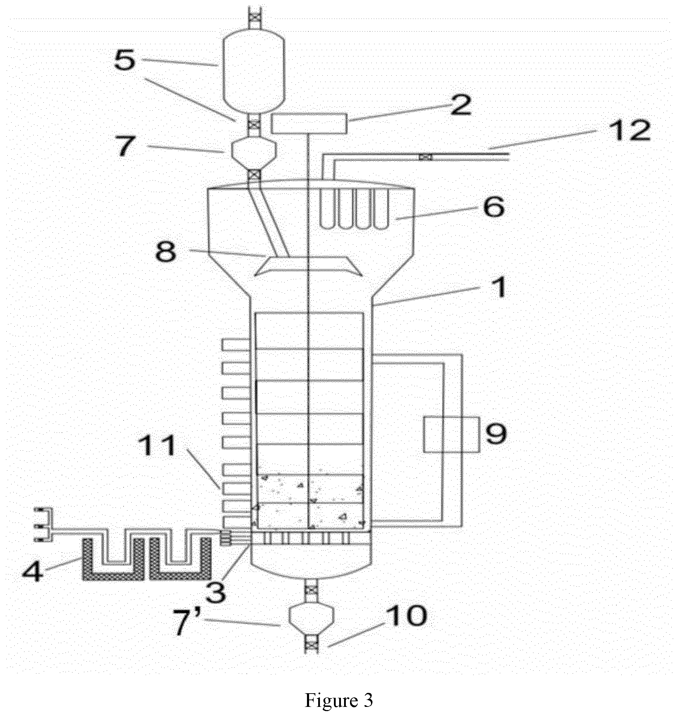

Figure 3 is a schematic view showing a reaction apparatus comprising a flap grate as a discharge device according to another preferred embodiment according to the present disclosure.

The reaction apparatus shown in Figure 3 comprises a main reactor 1 with an enlarged end; a stirring system 2, an electrode heating and temperature control system 9 and a material height display system 11 provided in the reaction zone of the main reactor 1; a flap grate 3 which is provided at the bottom of the main reactor 1 and comprises a mixed gas outlet; pressure locks 7 and 7' provided at the catalyst feed inlet at the top of the main reactor 1 and at the outlet of the reaction material; a catalyst distributing device 8 provided under the catalyst feed inlet at the top of the reactor; a gas outlet 12 located at a side of the upper part of the main reactor 1; and a filter 6 provided in front of the gas outlet.

When the reaction apparatus shown in Figure 3 is operated, a catalyst enters the main reactor 1 through the catalyst feed inlet and the pressure lock 7 from a catalyst storage tank 5, goes through the catalyst distributing device 8 for secondary dispersion, and then enters a carbon nanotube packed bed pre-stacked in the reactor to 1/2 of the height of the main reactor. A carrier gas and a carbon source gas, both of which are preheated in a preheating furnace 4, enter the main reactor 1 through the mixed gas outlet of the flap grate 3. The carbon source gas undergoes a CVD reaction under the action of the catalyst to generate carbon nanotubes and hydrogen. The material height display system 11 monitors the height of the material in the reactor in real time. More and more carbon nanotubes are generated gradually. The flap valve is opened to discharge the carbon nanotubes to a cooling tank. The carbon nanotubes are discharged from the reactor, and enter the pressure lock device 7'. The pressure lock sustains discharge from the reactor under high pressure. The carbon nanotubes are discharged from the reaction apparatus through the product discharge outlet 10. A reaction tail gas and hydrogen are discharged from the gas outlet 12 at the upper part of the main reactor through the filter 6. Continuous feed from the top of the reactor and continuous discharge from the bottom of the reactor are maintained to realize continuous production of carbon nanotubes.

The beneficial effects according to the present disclosure include:
(1) The reaction apparatus is suitable for low-carbon hydrocarbons having 6 or less carbon numbers, especially methane or propane, and the raw materials are cheap and easily available;
(2) The reaction apparatus integrates a flap valve or a tower grate with the reactor, which greatly saves the space for the components in the reactor, more conducive to the distribution of the reaction gas and the progress of the reaction;
(3) The pressure lock with which the reaction apparatus is equipped enables high-pressure operation of the reaction, and helps to reduce the influence of scale-up of the reactor diameter on heat transfer, accelerate the reaction rate and increase the output of carbon nanotubes per unit volume;
(4) According to the present disclosure, a carbon nanotube particle packed bed having multiple gas passages is used in combination with mixing of a particular proportion of a decarbonization gas into the reaction gas. As a result, the problem of catalyst deactivation due to carbon coating is solved satisfactorily; and preparation of carbon nanotubes and hydrogen with high carbon source utilization is realized, especially in the case of methane being used as a carbon source;
(5) By supplying electricity to the carbon nanotube packed bed directly for heating to provide the reaction temperature, the supporting facilities of the reaction apparatus are simplified greatly; the space is saved; the energy consumption is reduced; and the temperature control is more accurate;
(6) The method and apparatus according to the present disclosure enables preparation of high-purity carbon nanotubes with high yield and output, suitable for large-scale industrial continuous production.

The present disclosure will be further illustrated with reference to the following specific Examples. It's to be understood that these Examples are only intended to demonstrate the present disclosure without limiting the scope of the present disclosure. The experimental methods in the following examples for which no specific conditions are indicated will be carried out generally under conventional conditions or under those conditions suggested by the manufacturers. Unless stated otherwise particularly, ratios and percentages are based on moles.

Raw material sources and preparation:
(1) Carbon sources:
   Methane, propane and ethylene used in the Examples were all purchased from Shandong Anze Special Gas Co., Ltd.
(2) Carbon nanotubes:
   Aligned carbon nanotube powder was GT-210 produced by Shandong Dazhan Nanomaterials Co., Ltd. with a purity of 95.5%;
   Agglomerated carbon nanotube powder was GT-301 produced by Shandong Dazhan Nanomaterials Co., Ltd. with a purity of 98.8%.
(3) Solid chemical reagents:
   Aluminum nitrate nonahydrate, ferric nitrate nonahydrate, nickel nitrate hexahydrate, cobalt nitrate hexahydrate, manganese nitrate hexahydrate and magnesium nitrate hexahydrate were purchased from Zibo Aiken Economic and Trade Co., Ltd.

Tests of product properties:
(1) Ash test: Ash in the carbon nanotubes was determined according to National Standard GB/T 24490-2009. The main component of the ash was the magnetic catalyst which was unable to burn in the tests. Determination of ash may be used to determine the content of the carbon phase in a product, and thus characterize the purity of the carbon nanotubes indirectly.
(2) Specific surface area test: The specific surface areas of the products were determined with a N₂ physical adsorption analyzer according to National Standard GB/T 10722-2014.
(3) Micromorphology test:
   The outer diameters and lengths of the carbon nanotubes were determined by Scanning Electron Microscopy (SEM) and Transmission Electron Microscopy (TEM).

### Example 1:

Based on the reaction apparatus depicted in Figure 1, carbon nanotubes were prepared using the following steps:
(1) 20 Kg purified aligned carbon nanotube powder was taken; and the aligned carbon nanotube powder was pre-oxidized, and impregnated with a metal salt solution of ferric nitrate nonahydrate and aluminum nitrate nonahydrate for 12 hours.
(2) The resulting material was filtered, and the filter cake was granulated, dried at 120 °C for 15 h, and calcined at 400 °C for 4 h.
(3) The particles having a diameter of 10 mm obtained in step 2 were treated with a mixture of nitrogen: hydrogen at a ratio of 100 L/min: 200 L/min at 600 °C-630 °C to allow for reaction for 10 min, and then cooled for later use.
(4) The reactor used adopted an alumina refractory material for its inner part and stainless steel for its outer part. 30 KG aligned carbon nanotubes were preloaded on the top of the five-layer tower grate which had interlayer gaps and discharge scrapers. The main reactor was under the protection of preheated nitrogen. The stirring system was started first, and then the electrodes were energized to heat the carbon nanotube packed bed to 820 °C-825 °C. The carbon nanotube catalyst granules prepared in step 3 were added into the reactor uniformly and continuously through the pressure lock and the feeding-distributing device.
(5) A reaction gas of nitrogen: methane: carbon dioxide at a ratio of 1000 L/min: 520 L/min: 50 L/min was fed into the reactor, and the reactor was maintained at a pressure of 0.7±0.1 MPa and a temperature of 820 °C±3 °C to proceed the reaction.
(6) The material generated by the reaction was moved into the pressure lock continuously by the discharge scrapers of the tower grate, and then discharged into the cooling tank from the reactor through the discharge outlet. The above steps (4)-(6) were repeated to enable continuous production of multi-walled carbon nanotubes.
(7) The material was purged by flowing low-temperature nitrogen to the cooling tank, and cooled with a circulating water coil to below 50 °C. Then, the material was transferred to a finished material storage tank.

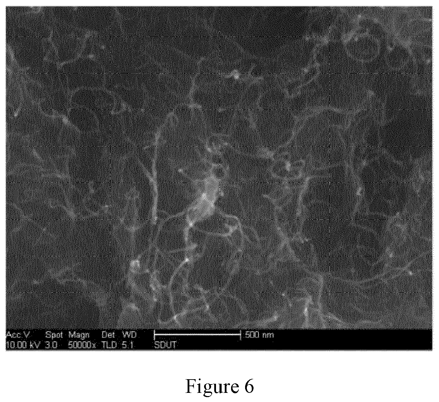

After the continuous reaction time reached 60 min, the weight of the product was measured to be 62.9 Kg. As tested, the product purity was ≥99.23%. The SEM photo of the obtained carbon nanotube product is shown in Figure 6, showing that its morphology was a fibrous tubular structure.

### Example 2:

Based on the reaction apparatus depicted in Figure 3, carbon nanotubes were prepared using the following steps:
(1) 820 g of a cobalt-nickel-based catalyst precursor was prepared by a gel method. Particularly, nickel nitrate hexahydrate, cobalt nitrate hexahydrate and citric acid were weighed in amounts based on the formulation and dissolved in purified water, heated and reacted for 4-8h. Water was evaporated at 80 °C until the density and viscosity were qualified. Then, the resulting precursor was dried at 120°C, calcined at 600°C for 4 hours, and screened through an 80-mesh sieve for later use.
(2) The precursor obtained in step 1 was treated with a mixture of argon: hydrogen at a ratio of 150 L/min: 200 L/min at 580 °C-600 °C to allow for reaction for 20 min.
(3) The catalyst obtained in step 2 was mixed with 40 Kg of an agglomerated carbon nanotube powder uniformly.
(4) The reactor used was a quartz reactor. 20 Kg of agglomerated carbon nanotubes were preloaded on the top of the flap valve in the quartz reactor. The porosity of the distributing device was 9%, and the hole diameter was 6 mm. The main reactor was under the protection of preheated nitrogen. The stirring system was started first, and then the electrodes were energized to heat the carbon nanotube composite to 785 °C-800 °C. The carbon nanotube catalyst mixture prepared in step 3 was added into the carbon nanotube bed in the reactor uniformly and continuously through the pressure lock and the feeding-distributing device.
(5) A reaction gas of argon: methane: carbon dioxide at a ratio of 1200 L/min: 400 L/min: 60 L/min was fed into the reactor, and the reactor was maintained at a pressure of 1.2±0.1MPa and a temperature of 790 °C±4 °C to proceed the reaction.
(6) The material generated by the reaction entered the pressure lock intermittently through the flap grate, and then discharged into the cooling tank from the reactor through the discharge outlet. The above steps (4)-(6) were repeated to enable continuous production of multi-walled carbon nanotubes.
(7) The material was purged by flowing low-temperature nitrogen to the cooling tank, and cooled with a circulating water coil to below 45 °C. Then, the material was transferred to a finished material storage tank.

After the continuous reaction time reached 75 min, the weight of the product was measured to be 72.1 Kg. As tested, the product purity was ≥99.06%. The SEM photo of the obtained carbon nanotube product is shown in Figure 7, showing that its morphology was a fibrous tubular structure.

### Example 3:

Based on the reaction apparatus depicted in Figure 3, carbon nanotubes were prepared using the following steps:
(1) 10 Kg of a 100-120 mesh active lamellar catalyst precursor was prepared using a natural lamellar raw material - vermiculite. 100-120 mesh vermiculite flakes were soaked in an active metal solution of cobalt nitrate hexahydrate and ferric nitrate nonahydrate, stood still for 4-7 days, and then filtered.
(2) The above filtered precursor was dried at 130 °C for 20 h, calcined at 450 °C for 3 h, ground, screened through a 100-mesh sieve, mixed with 50 Kg of aligned carbon nanotube powder, and dry granulated, wherein the spherical particles obtained by the granulation had a diameter of 11 mm.
(3) 21 Kg of the particles having a diameter of 11 mm in the product obtained in step 2 were treated with a mixture of argon: hydrogen at a ratio of 100 L/min: 160 L/min at 580 °C-600 °C to allow for reaction for 15min.
(4) The reactor used was an all-stainless steel reactor. 20 Kg of aligned carbon nanotubes were preloaded on the top of the flap valve in the stainless steel reactor. The porosity of the distributing device was 12%, and the hole diameter was 8 mm. The main reactor was under the protection of preheated nitrogen. The stirring system was started first, and then the electrodes were energized to heat the carbon nanotubes to 770 °C-780 °C. The carbon nanotube catalyst granules prepared in step 3 were added into the carbon nanotube bed in the reactor uniformly and continuously through the pressure lock and the feeding-distributing device.
(5) A reaction gas of argon: propane: carbon dioxide at a ratio of 300 L/min: 100 L/min: 6 L/min was fed into the reactor, and the reactor was maintained at a temperature of 770 °C±5 °C to proceed the reaction for 90 min.
(6) After the reaction time reached 90 min, introduction of the reaction gas was stopped, while introduction of nitrogen was continued at a flow rate of 550 L/min. The flap valve was opened, and the carbon nanotubes were discharged to the cooling tank. The above steps (4)-(6) were repeated to enable continuous production of multi-walled carbon nanotubes.
(7) The material was purged by flowing low-temperature nitrogen to the cooling tank, and cooled with a circulating water coil to below 45 °C. Then, the material was transferred to a finished material storage tank. The weight of the product was measured to be 54.3 Kg. As tested, the product purity was ≥99.06%. The SEM photo of the obtained carbon nanotube product is shown in Figure 8, showing that its morphology was a fibrous tubular structure.

### Example 4:

Based on the reaction apparatus depicted in Figure 2, carbon nanotubes were prepared using the following steps:
(1) A co-precipitation method was used to prepare 300 g of a cobalt-manganese catalyst precursor: according to the formulation, cobalt nitrate hexahydrate was added to a manganese nitrate solution, and diluted with purified water to a suitable concentration. Then, aluminum nitrate nonahydrate and magnesium nitrate hexahydrate were added to formulate a metal solution. A dilute sodium hydroxide solution was used as a precipitant. These two solutions were added dropwise and mixed by the co-precipitation method to realize co-precipitation of different metal salts. After the reaction was completed, filtration was conducted, and the filter cake was washed with water to neutral.
(2) The obtained filter cake was dried at 120 °C for 12 h and calcined at 600 °C for 4 h.
(3) The particles obtained in step 2 were treated with a mixture of nitrogen: hydrogen at a ratio of 100 L/min: 200 L/min at 600 °C-630 °C to allow for reaction for 15min, and then cooled for later use.
(4) The reactor used adopted an alumina refractory material for its inner part and stainless steel for its outer part. 30 KG agglomerated carbon nanotubes were preloaded on the top of the three-layer tower grate which had a gas distributor and discharge scrapers. The main reactor was under the protection of preheated nitrogen. The stirring system was started first, and then the electrodes were energized to heat the carbon nanotube packed bed to 650 °C-660 °C.
   The carbon nanotube catalyst granules prepared in step 3 were added into the reactor uniformly and continuously through the pressure lock and the feeding-distributing device.
(5) A reaction gas of nitrogen: ethylene: carbon dioxide at a ratio of 800 L/min: 650 L/min: 30 L/min was fed into the reactor, and the reactor was maintained at a pressure of 0.3±0.1 MPa and a temperature of 660 °C±3 °C to proceed the reaction.
(6) The material generated by the reaction was moved into the pressure lock continuously by the discharge scrapers of the tower grate, and then discharged into the cooling tank from the reactor through the discharge outlet. The above steps (4)-(6) were repeated to enable continuous production of multi-walled carbon nanotubes.
(7) The material was purged by flowing low-temperature nitrogen to the cooling tank, and cooled with a circulating water coil to below 50 °C. Then, the material was transferred to a finished material storage tank.

After the continuous reaction time reached 60 min, the weight of the product was measured to be 67.1 Kg. As tested, the product purity was ≥99.19%. The SEM photo of the obtained carbon nanotube product is shown in Figure 9, showing that its morphology was a fibrous tubular structure.

Carbon nanotubes can be prepared with high output and purity according to the method of the present disclosure, and thus may be used for electroconductive materials, electromagnetic shielding, solar energy batteries, the rubber field, improvement of dynamic performances of composite materials, etc. As it can be seen from the Examples of the disclosure, the use of the reaction apparatus according to the present disclosure allows for continuous preparation of carbon nanotubes. The method for preparation of carbon nanotubes using this reaction apparatus is characterized by simple operation, and high utilization of the catalyst and carbon source. It satisfies the requirements of commercial applications, suitable for large-scale industrial production.

For the process method for continuous preparation of carbon nanotubes and hydrogen according to the present disclosure, the amounts and proportions of the raw materials and the process parameters are not limited by the Examples provided above. Various changes or modifications to the present disclosure can be made by those skilled in the art after reading the above teachings of the present disclosure, and these equivalent variations fall in the scope defined by the accompanying claims of the application as well.

## Claims

1. A method for continuous preparation of carbon nanotubes and hydrogen, comprising:
(a) preparing a catalyst precursor, or pretreating a catalyst precursor onto a support;
(b) pre-reducing the catalyst precursor or the catalyst precursor supported on carbon nanotubes;
(c) preloading carbon nanotubes into a reactor to a height to form a packed bed, and electrically heating the carbon nanotubes to a CVD reaction temperature in the presence of a protective gas;
(d) feeding the catalyst or the catalyst supported on the carbon nanotubes obtained in step (b) into the reactor;
(e) introducing a carbon source gas into the reactor while stirring a solid material in the reactor to form new carbon nanotubes and hydrogen by the CVD reaction;
(f) keeping the carbon nanotube bed at a level and continuously discharging a portion of the carbon nanotubes and a portion of the hydrogen; and
(g) repeating steps (d) - (f) to realize continuous preparation of the carbon nanotubes.

2. The method of claim 1, wherein said pretreating a catalyst precursor onto a support is performed by a process selected from the group consisting of precipitation, impregnation, sol-gel, melting or thermal decomposition.

3. The method of claim 1, wherein in step (c), the height of the preloaded carbon nanotube packed bed is 1/5-4/5, preferably 1/2-4/5 of a height of the reactor as measured from a bottom of the reactor.

4. The method of claim 1, wherein the carbon nanotubes are electrically heated directly, and optionally, the heating is assisted by resistance wire heating, graphite electrode heating, silicon-molybdenum rod heating or a combination thereof.

5. The method of claim 1, wherein in step (e), a decarbonization gas is introduced at a ratio continuously or intermittently, wherein the decarbonization gas is carbon dioxide, oxygen, water vapor or a combination thereof, preferably carbon dioxide.

6. The method of claim 1, wherein the carbon source gas is a hydrocarbon having 6 or less carbon atoms, with methane, propane and ethylene being preferred, and methane and propane being more preferred.

7. An apparatus for continuous preparation of carbon nanotubes and hydrogen, comprising:
(a) a main reactor for a CVD reaction, wherein the main reactor has a catalyst feed inlet, a gas inlet, a reaction material outlet and a gas outlet; wherein a stirring system and a heating and temperature control system are provided in a reaction zone of the main reactor;
(b) a catalyst storage tank, wherein the catalyst storage tank is provided above the main reactor and in communication with the main reactor through the catalyst feed inlet; and
(c) a discharge device, wherein the discharge device is provided at a bottom of the main reactor to discharge a carbon nanotube product from the reactor through the reaction material outlet,
wherein the gas inlet is located at the bottom of the main reactor, and the gas outlet is located at a top of the main reactor for discharging a reaction tail gas and hydrogen.

8. The apparatus of claim 7, wherein the discharge device is a tower grate, a flap grate or a star discharger.

9. The apparatus of claim 7, wherein the apparatus further comprises a catalyst feeding-distributing device provided at the catalyst feed inlet of the main reactor.

10. The apparatus of claim 8, wherein the apparatus further comprises a pressure lock device provided at the catalyst feed inlet and a pressure lock device provided at the product outlet.
